# EUROPÄISCHE PATENTSCHRIFT

(11) **EP 4 334 225 B1**
(45) Veröffentlichungstag und Bekanntmachung des Hinweises auf die Patenterteilung: **02.12.2026**
(21) Anmeldenummer: 22728094.8
(22) Anmeldetag: 05.05.2022
(51) Int. Cl.: B65G 1/04, B21D 43/20, B23Q 7/04, B25J 15/00, B25J 15/06, B65G 47/91, B65G 57/04, B65G 59/04, B65G 61/00

(54) **GREIFEINHEIT, HANDHABUNGSSYSTEM UND VERFAHREN ZUM GREIFEN VON PLATTENFÖRMIGEN WERKSTÜCKEN FÜR HORIZONTALES LAGERN UND PUFFERN**
GRIPPING UNIT, HANDLING SYSTEM AND METHOD FOR GRIPPING PLANAR WORKPIECES FOR HORIZONTAL STORAGE AND BUFFERING
UNITÉ DE PRÉHENSION, SYSTÈME DE MANIPULATION ET PROCÉDÉ DE PRÉHENSION DE PIÈCES PLANES POUR LE STOCKAGE HORIZONTAL ET L'ENTREPOSAGE TEMPORAIRE

(30) Priorität: 07.05.2021 DE 102021111971
(43) Veröffentlichungstag der Anmeldung: 13.03.2024
(73) Patentinhaber: HOMAG Automation GmbH, 09638 Lichtenberg (DE)
(72) Erfinder: LUDWIG, Jens, 09600 Oberschöna (DE); BRUSKY, Stefan, 09638 Lichtenberg (DE); FREITAG, Jochen, 01159 Dresden (DE)
(74) Vertreter: Hoffmann Eitle
(86) Internationale Anmeldenummer: PCT/EP2022/062126
(87) Internationale Veröffentlichungsnummer: WO 2022/234004

(56) Entgegenhaltungen:
- EP-A1- 3 808 515
- DE-U1- 202007 013 673
- FR-A1- 3 057 561
- JP-A- 2011 178 531
- JP-A- S6 080 586
- JP-A- S61 136 839
- JP-U- S6 232 047

## Beschreibung

### Technisches Gebiet

Die Erfindung betrifft eine Greifeinheit mit einer Basis, die dazu ausgebildet ist, mit einer Handhabungseinrichtung verbunden zu werden. Darüber hinaus betrifft die Erfindung ein Handhabungssystem für horizontales Lagern und Puffern von plattenförmigen Werkstücken mit einer Lagereinheit und einer Handhabungseinrichtung, die mit der Greifeinheit verbunden ist. Zudem betrifft die Erfindung ein Verfahren zum Greifen und Lagern von plattenförmigen Werkstücken, die bevorzugt zumindest abschnittweise aus Holz, Holzwerkstoffen, Kunststoff, Aluminium oder dergleichen besteht.

### Stand der Technik

In der heutigen Möbel- und Bauelementeindustrie ist es unumgänglich, eine Vielzahl an unterschiedlichen zu bearbeitenden Werkstücken im Fertigungsprozess maschinell zu transportieren und zu lagern. Auf diese Vorgänge wird jeher ein besonderer Fokus im Hinblick auf Kosteneinsparung und Prozesseffizienz gesetzt. Insbesondere das Handling von plattenförmigen Werkstücken wird in modernen Fertigungsanlagen durch Industrieroboter durchgeführt, die mit entsprechenden Greifeinheiten ausgestattet sind.

Beim Greifen und Transportieren von größeren plattenförmigen Werkstücken müssen die Materialeigenschaften und die Geometrie der Werkstücke berücksichtigt werden, um ein sicheres und schadenfreies Handling mit einer entsprechenden Greifeinheit zu gewährleisten. Darüber hinaus spielen beim Einbringen von größeren plattenförmigen Werkstücken in eine Lagereinheit neben deren geometrischen Eigenschaften auch die der Greifeinheit selbst eine Rolle.

Beispielsweise neigen die mit einer Greifeinheit abschnittsweise fixierten plattenförmigen Werkstücke beim Anheben dazu, sich auf Grund ihres Eigengewichts mit abnehmender Materialstärke elastisch zu verformen. In Folge des auftretenden Biegemoments ändert sich die Geometrie der größeren plattenförmigen Werkstücke, die in Form einer Biegelinie dargestellt werden kann.

Soll ein sich derartig beim Anheben verformendes plattenförmiges Werkstück beispielsweise in einem Regallager horizontal gestapelt werden, muss beim Einbringen des obersten Werkstücks des Stapels mindestens eine Scheitelhöhe der Biegelinie als lichte Höhe im Regalfach reserviert werden. Dies hat den Nachteil, dass die Kapazität der Regalfächer einer Lagereinheit nicht vollständig zum Lagern ausgenutzt werden kann.

Greifeinheiten hierzu sind im Stand der Technik insbesondere aus der JP S60 80586 A, der DE 20 2007 013673 U1, der EP 3 808 515 A1, der JP S61 136839 A, der JP 2011 178531 A und der FR 3 057 561 A1 bekannt. Die JP S62 32047 U offenbart eine Greifeinheit nach dem Oberbegriff des Anspruchs 1.

### Darstellung der Erfindung

Der Erfindung liegt daher die Aufgabe zugrunde, eine einfache und effiziente Möglichkeit bereitzustellen, um plattenförmige Werkstücke aufzunehmen und platzsparend in einem Lager abzulegen.

Erfindungsgemäß wird diese Aufgabe durch eine Greifeinheit nach Anspruch 1, ein Handhabungssystem nach Anspruch 8 und ein Verfahren nach Anspruch 9 gelöst. Unteransprüche beziehen sich auf bestimmte Ausführungsformen.

Der Erfindung liegt dabei insbesondere die Erkenntnis zugrunde, dass ein gehaltenes plattenförmiges Werkstück mit Hilfe von einzelnen zueinander bewegbaren Greifeinheiten derart elastisch verformt werden kann, dass die durch das Eigengewicht des Werkstücks (ungewollten) elastischen Verformungen teilweise kompensiert werden. Auf diese Weise ist es möglich, die Scheitelhöhen der Biegelinie auf ein Minimum zu reduzieren.

Unter Nutzung dieser Erkenntnisse stellt die Erfindung eine Greifeinheit zum Greifen von Werkstücken bereit, welche eine Basis aufweist, die dazu ausgebildet ist, mit einer Handhabungseinrichtung verbunden zu werden, und mindestens zwei Greifvorrichtungen, die jeweils eine Greiffläche aufweisen, die dazu eingerichtet sind, ein plattenförmiges Werkstück, das bevorzugt zumindest abschnittweise aus Holz, Holzwerkstoffen, Kunststoff, Aluminium oder dergleichen besteht, gemeinsam und bevorzugt abschnittsweise zu halten, wobei jede Greifvorrichtung dazu eingerichtet ist, unabhängig von, und/oder gegenläufig zu, der anderen Greifvorrichtung, bevorzugt während das Werkstück gehalten wird, um eine Kippachse verkippt zu werden.

Die Erfindung sorgt in vorteilhafter Weise dafür, dass durch ein Verkippen von mindestens zwei Greifvorrichtungen einer Greifeinheit, welche ein plattenförmiges Werkstück fixieren, ein durch das Eigengewicht des Werkstücks hervorgerufenes Biegemoment so abgeändert werden kann, dass sich der Verlauf der entsprechenden Biegelinie ändert und die entsprechenden Scheitelhöhen auf ein Minimum reduziert werden. Auf diese Weise kann die zum horizontalen Einbringen des plattenförmigen Werkstücks benötigte lichte Höhe eines Regalfachs reduziert werden. Folglich wird die Kapazität der Regalfächer einer Lagereinheit beim horizontalen Stapeln plattenförmiger Werkstücke erhöht. Es ist insbesondere vorteilhaft, wenn die Greifeinheit genau zwei Greifvorrichtungen aufweist.

Auf Grund der reduzierten Scheitelhöhen der Biegeline des gehalten plattenförmigen Werkstücks wird auch der Platzbedarf zum Transportieren der Werkstücke in vorteilhafter Weise verringert. Damit sind letztendlich effizientere Bewegungsabläufe für die Handhabungseinrichtung möglich.

Gleichzeitig ist es vorteilhaft, dass die mindestens zwei Greifvorrichtungen der Greifeinheit das Werkstück jeweils nur abschnittsweise halten. Dies gewährleistet eine kompakte **Greifeinheit,** die platzsparend in ein Lagerregal verfahren werden kann.

Bevorzugt weist die Greifvorrichtung und/oder Greiffläche der Greifeinheit eine Längs- und Querachse auf, wobei die Längsachse der einen Greifvorrichtung und/oder Greiffläche parallel zu der Längsachse der anderen Greifvorrichtung und/oder Greiffläche ausgerichtet sind. Dies hat den Vorteil, dass die mindestens zwei Greifvorrichtungen eine kompakte Struktur bilden, die entsprechend tief in ein Regalfach eines Regallagers verfahren werden kann.

Darüber hinaus ermöglicht die parallele Ausrichtung der Längsachsen der mindestens zwei Greifvorrichtungen, dass ein gehaltenes Werkstück symmetrisch gehalten und elastisch verformt werden kann.

Bei der Erfindung ist an einem distalen Ende jeder Greiffläche eine Gelenkachse zum Verkippen der Greiffläche angeordnet, wobei die Gelenkachsen mit einem, bevorzugt mindestens zwei Aktoren gesteuert werden. Auf Grund dieser Anordnung können die Greifvorrichtungen mit Hilfe der Gelenkachse von einem äußeren Ende der Greifeinheit verkippt werden. Dies bietet den Vorteil, dass eine derartige Greifeinheit eine flache Struktur aufweist, die nur eine geringe lichte Höhe zum Einfahren in ein Regalfach eines Regallagers in Anspruch nimmt. Folglich kann beim horizontalen Stapeln von plattenförmigen Werkstücken die Kapazität in einem Regalfach erhöht werden.

Weiterhin bietet es den Vorteil, dass die jeweiligen Gelenkachsen mit Hilfe der Aktoren individuell ansteuerbar sind. Damit können die jeweiligen Greifvorrichtungen in unterschiedlicher Weise verkippt und das plattenförmige Werkstück auf unterschiedliche Weise elastisch verformt werden. Dies ist insbesondere dann vorteilhaft, wenn die Greifvorrichtungen asymmetrisch bezüglich des Schwerpunktes des gehaltenen plattenförmigen Werkstücks ausgerichtet sind und sich eine asymmetrische Biegelinie ergibt.

Bevorzugt wird weiterhin für die Greifeinheit, dass in einer Nullstellung die Greifflächen der Greifvorrichtungen in einer gemeinsamen Ebene liegen. Auf diese Weise kann das plattenförmige Werkstück im abgelegten Zustand mit Hilfe der gesamten Greiffläche der Greifvorrichtungen gegriffen werden. Gleichzeitig weist eine derartige Greifeinheit eine flache Struktur auf, die nur eine geringe lichte Höhe zum Einfahren in ein Regalfach eines Regallagers benötigt.

In einer weiter bevorzugten Ausführungsform ist die Greifeinheit derart ausgeführt, dass in einer Kippstellung die Greifvorrichtungen und/oder Greifflächen um einen Kippwinkel α > 0 Grad, bevorzugt > 0 Grad und < 10 Grad, bevorzugt > 0 und < 5 Grad, um die Kippachse gekippt sind. Unter Anwendung dieser Kippwinkel ist eine elastische Verformung des gehaltenen plattenförmigen Werkstücks möglich, wobei strukturelle Schäden am Werkstück vermieden werden. Gleichzeitig kann auf die Biegeline des gehaltenen und verkippten Werkstücks derart eingewirkt werden, dass die entsprechenden Scheitelhöhen der Biegelinie auf ein Minimum reduziert werden.

In einer weiterbevorzugten Ausführungsform sind in einer Kippstellung die Greifvorrichtungen und/oder Greifflächen gegenläufig, bevorzugt im Wesentlichen V-förmig, zueinander verkippt. Dies bietet den Vorteil, die gehaltenen plattenförmigen Wertstücke im peripheren Bereich entsprechend ihrer Biegelinie elastisch zu verformen.

Bevorzugt wird weiterhin für die Greifeinheit, dass die Greifvorrichtungen als Saugvorrichtungen, insbesondere als Flachsauger, ausgebildet sind, welche eine Saugfläche aufweisen. Auf diese Weise kann eine schonende, schnelle und sichere Fixierung der Werkstücke gewährleistet werden. Außerdem ist es von Vorteil, dass die Saugvorrichtungen als Flachsauger eine besonders flache Struktur aufweisen, die nur eine geringe lichte Höhe zum Einfahren in ein Regalfach eines Regallagers benötigen. Darüber hinaus können die Flachsauger schnell ausgetauscht und bei Bedarf auf die Größe der plattenförmigen Werkstücke angepasst werden.

In einer bevorzugten Ausgestaltung weist die Greifeinheit einen, bevorzugt optischen, Sensor auf, welcher dazu eingerichtet ist eine Biegelinie des gehaltenen Werkstücks zu erfassen. Auf diese Weise ist es möglich, dass die Greifeinheit selbstständig unterschiedliche Biegelinien von gehaltenen plattenförmigen Werkstücken erfassen und an eine entsprechende Steuereinheit weiterleiten kann. Dies bietet den Vorteil, dass die Greifvorrichtungen entsprechend einer erfassten Biegelinie eines Werkstücks verkippt werden können. Die Erfindung stellt außerdem ein Handhabungssystem für horizontales Lagern und Puffern von plattenförmigen Werkstücken bereit, die bevorzugt zumindest abschnittweise aus Holz, Holzwerkstoffen, Kunststoff, Aluminium oder dergleichen bestehen, mit einer Handhabungseinrichtung, die mit einer Greifeinheit nach einem der Ansprüche 1-7 verbunden ist; einer Lagereinheit mit Regalfächern, die bevorzugt horizontal angeordneten sind, um die plattenförmigen Werkstücke, bevorzugt horizontal zu stapeln.

Das Handhabungssystem bietet den Vorteil, dass die mit der Greifeinheit gehaltenen plattenförmigen Werkstücke auf Grund ihrer optimierten Biegelinie platzsparend transportiert und effizient in das Regallager verfahren bzw. horizontal gestapelt werden können. Dies bietet den Vorteil, dass der Platzbedarf des gesamten Handhabungssystem geringgehalten und die Kapazität der Regallagers erhöht werden kann.

Weiterhin schlägt die Erfindung ein Verfahren zum Greifen und Lagern von einem plattenförmigen Werkstück vor, das bevorzugt zumindest abschnittweise aus Holz, Holzwerkstoffen, Kunststoff, Aluminium oder dergleichen besteht, bevorzugt mit einer Greifeinheit nach einem der Ansprüchen 1 bis 7, mit den Schritten: Ausrichten von mindestens zwei Greifvorrichtungen einer **Greifeinheit,** die jeweils eine Greiffläche aufweisen, in eine Nullstellung, sodass die Greifflächen in einer gemeinsamen Ebene liegen; Greifen des plattenförmigen Werkstücks mit Hilfe der mindestens zwei in Nullstellung ausgerichteten Greifflächen; gegenläufiges, bevorzugt V-förmiges, Verkippen der Greifvorrichtungen und/oder Greifflächen zueinander in eine Kippstellung, während das Werkstück gehalten wird; Verfahren der Greifeinheit mit den in Kippstellung befindlichen Greifvorrichtungen und dem gegriffenen Werkstück zu einer Lagereinheit; Ausrichten der mindestens zwei Greifvorrichtungen mit dem gehaltenen Werkstück von der Kippstellung zurück in die Nullstellung innerhalb eines Regalfachs einer Lagereinheit und Ablegen des Werkstücks innerhalb des Regalfachs.

Das Verfahren ist dahingehend vorteilhaft, dass durch ein Verkippen von mindestens zwei Greifvorrichtungen einer Greifeinheit, welche ein plattenförmiges Werkstück fixieren, ein durch das Eigengewicht des Werkstücks hervorgerufenes Biegemoment so abgeändert werden kann, dass sich der Verlauf der entsprechenden Biegelinie ändert und die entsprechenden Scheitelhöhen auf ein Minimum reduziert werden. Auf diese Weise kann die zum horizontalen Einbringen des plattenförmigen Werkstücks benötigte lichte Höhe eines Regalfachs reduziert werden. Folglich wird die Kapazität der Regalfächer einer Lagereinheit beim horizontalen Stapeln plattenförmiger Werkstücke erhöht.

Die reduzierten Scheitelhöhen der Biegeline des gehalten plattenförmigen Werkstücks bieten darüber hinaus den Vorteil, dass der Platzbedarf zum Transportieren der Werkstücke verringert wird. Damit können letztendlich die Bewegungsabläufe der Handhabungseinrichtung effizienter gestaltet werden.

### Kurze Beschreibung der Zeichnungen

Weitere Merkmale und Vorteile der Greifeinheit, des Handhabungssystems und des Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine schematische Draufsicht der Greifeinheit;
- Fig. 2: eine Schnittansicht eines mittels der Greifeinheit gehaltenen plattenförmigen Werkstücks in Nullstellung innerhalb eines Regalfachs;
- Fig. 3: eine Schnittansicht eines mittels der Greifeinheit gehaltenen plattenförmigen Werkstücks in Kippstellung innerhalb eines Regalfachs;

### Beschreibung von Ausführungsformen

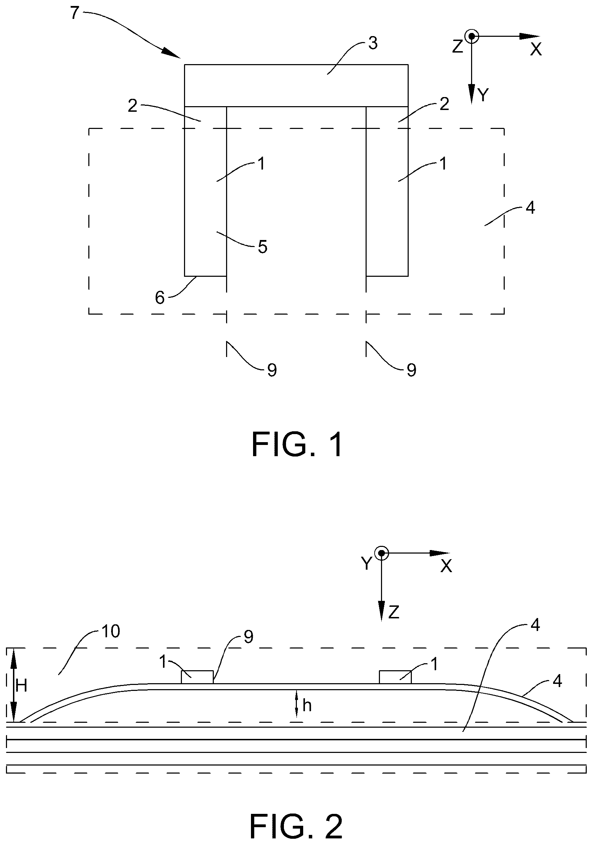

Figur 1 zeigt eine schematische Draufsicht einer Greifeinheit (7). Diese weist eine Basis (3) auf, welche mit einer Handhabungseinrichtung verbunden werden kann. Die Handhabungseinrichtung kann beispielsweise ein Industrieroboter, ein Sechsachsroboter, ein Linearroboter, ein Portalroboter, ein Roboter mit Parallelkinematik, oder eine vergleichbare Einrichtung sein. Dies ermöglich es, die Greifeinheit (7) an unterschiedliche Orte zu verfahren.

An der Basis (3) der Greifeinheit (7) sind zwei parallel nach vorne (in Y-Richtung) ausgerichtete Greifvorrichtungen (1) angebracht, deren Greifflächen nach unten (Z-Richtung) weisen und ein schematisch angedeutetes plattenförmiges Werkstück (4) halten. An der Basis können jedoch auch mehr als zwei Greifvorrichtungen (1) vorhanden sein. Für den Fachmann ist in diesem Zusammenhang verständlich, dass die gemäß dieser Ausführungsform beschriebenen technischen Spezifikationen, Funktionen und Vorteile auch auf mehrere Greifvorrichtungen (1) entsprechend übertragbar sind und nicht nur für zwei Greifvorrichtungen (1) beschrieben sind.

Die Greifvorrichtungen (1) sind gemäß als Saugvorrichtungen und insbesondere als Flachsauger mit entsprechenden Saugflächen ausgeführt, die das plattenförmige Werkstück (4) mit ihrer Saugfläche zum Halten ansaugen können. Es wäre aber auch denkbar, die Greifvorrichtungen (1) mit einem mechanische Klemmmechanismus oder mit einem magnetisch wirkenden Haltemechanismus auszustatten.

Gemäß Figur 1 befinden sich am distalen Ende jeder Greifvorrichtung (1), insbesondere im peripheren Bereich der Querachsen (6), Gelenkachsen (2), welche dazu dienen, die Greifvorrichtungen entlang einer Kippachse (9), die parallel zu den Längsachsen der Greifvorrichtungen (1) bzw. zu der Y-Achse verläuft, zu verkippen. Die jeweiligen Gelenkachsen (2) können entweder über einen Aktor gleichzeitig oder über zwei Aktoren separat angesteuert und bewegt werden. Die Kippwinkel α der gekippten Greifvorrichtungen können dabei beispielsweise identisch sein oder sich unterscheiden.

Die beiden parallel nach vorne (in Y-Richtung) ausgerichteten Greifvorrichtung (1) können einen Abschnitt des plattenförmigen Werkstücks (4) greifen. Beim Ablegen und Aufnehmen von horizontal gestapelten plattenförmigen Werkstücken innerhalb eines Regalfachs (10) eines Regallagers werden die Greifvorrichtungen (1) bevorzugt teilweise und/oder vollständig in das Regalfach (10) verfahren.

Die Greifvorrichtungen (1) der Greifeinheit (7) können gemäß dieser Ausführungsform außerdem mittels einer Linearführung (11) entlang der Basis (3) in X-Richtung verfahren werden. Dadurch ist es möglich, die Spur der zwei Greifvorrichtungen (1) zu verändern. Mit anderen Worten, die zwei Greifvorrichtungen (1) können unabhängig voneinander in X-Richtung entlang der Basis (3) verfahren werden. Dies hat den Vorteil, dass die Greifvorrichtungen (1) der Greifeinheit (7) die plattenförmigen Werkstücke (4) in unterschiedlichen Bereichen greifen kann bzw. vor dem Greifen auf unterschiedlich große Werkstücke (4) angepasst werden kann.

Darüber hinaus ist es gemäß dieser Ausführungsform möglich, dass die zwei Greifvorrichtungen (1) auch als Tandem mittels der Linearführung (11) verfahren werden können. Mit anderen Worten, die zwei Greifvorrichtungen (1) können nur gemeinsam in X-Richtung entlang der Basis (3) verfahren werden. Dies setzt jedoch voraus, dass eine Spur gewählt ist, bei welcher die zwei Greifvorrichtungen (1) sich nicht an den beiden in X-Richtung gelegenen äußeren Enden der Basis (3) befinden. Durch das Verfahren der Greifvorrichtungen (1) als Tandem ist es möglich, die Position eines gehaltenen Werkstücks (4) zu justieren ohne die Handhabungseinrichtung zu bewegen. Dies ist insbesondere dann vorteilhaft, wenn die Greifeinheit (7) bereits in ein Regalfach verfahren wurde und eine Bewegung der Greifeinheit (7) mit Hilfe der Handhabungseinrichtung zu einer Kollision mit dem Regal(-fach) führen würde.

Das oben beschriebene Verfahren der zwei Greifvorrichtungen (1) der Greifeinheit (7) mittels der Linearführung (11) in **X-**Richtung entlang der Basis wird beispielsweise realisiert, indem die beiden Greifvorrichtungen (1) mittels zwei schaltbarer Kupplungen im Antriebsstrang verstellt werden.

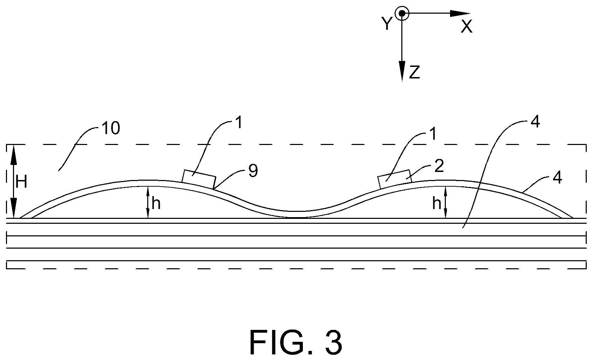

Die Figuren 2 und 3 zeigen jeweils eine Schnittansicht eines plattenförmigen Werkstücks (4), welches mittels der Greifvorrichtungen (1) innerhalb eines Regalfachs (10) eines Regallagers über einem horizontal gestapelten Werkstückstapel gehalten wird.

Wie Figur 2 veranschaulicht, befinden sich die beiden Greifvorrichtungen (1) mit dem gehaltenen Werkstück (4) in Nullstellung. Mit anderen Worten, die zwei Greifvorrichtungen (1) sind nicht um die Kippachse gekippt und die entsprechenden Kippflächen liegen im Wesentlichen in einer gemeinsamen Ebene, welche parallel zur X-Achse verläuft.

Figur 2 zeigt darüber hinaus schematisch (überspitzt), wie sich die Geometrie eines größeren plattenförmigen Werkstücks bei einer abschnittsweisen Fixierung ohne Verkippung der Greifvorrichtungen (1) verhält. Auf Grund der Gravitationswirkung (in Z-Richtung) wirkt auf die nicht fixierten Bereiche des plattenförmigen Werkstücks ein Biegemoment, welches dazu führt, dass die äußeren Enden des Werkstücks nach unten (in Z-Richtung) durchhängen. Als Folge dieser (elastischen) Verformung beschreibt die Schnittansicht des plattenförmigen Werkstücks in X- und Y-Richtung eine parabelförmige/-ähnliche Biegelinie, welche zwischen den beiden Greifvorrichtungen (1) eine (maximale) Scheitelhöhe h aufweist. Um das Werkstück vollständig in Z-Richtung anheben zu können, muss dieses daher mindestens um die Scheitelhöhe h gehoben werden.

Figur 3 zeigt schematisch (überspitzt), wie sich die Scheitelhöhe(n) h eines mittels Greifvorrichtungen (1) abschnittsweise gehaltenen Werkstücks (4) im Vergleich zu dem in Nullstellung gehaltenen Werkstücks (4) in Figur 2 verringern lässt. Dazu werden die Greifvorrichtungen (1) bei gehaltenem Werkstück um den Kippwinkel α gegensätzlich um die Kippachse (9) gekippt, sodass diese V-förmig zueinander ausgerichtet sind. Dies hat zur Folge, dass weitere Biegemomente auf das plattenförmige gehaltene Werkstück (4) einwirken, wodurch die Biegeline des Werkstücks mehrere abgeflachte parabelförmige/-ähnliche Abschnitte in X- und Y-Richtung beschreibt. Die jeweiligen Scheitelhöhen h der abgeflachten parabelförmigen Abschnitte in der Kippstellung sind jedoch kleiner als die Scheitelhöhen h der parabelförmigen Biegelinie des Werkstücks (4) in der Nullstellung. Auf diese Weise ist es möglich, die lichte Höhe H des Regalfachs (10) des Regallagers, welche für das Einbringen des Werkstücks (4) zusammen mit der Greifeinheit (7)) reserviert werden muss, zu reduzieren.

### Bezugszeichenliste

- 1: Greifvorrichtung/Flachsauger
- 2: Gelenkachse/Aktor
- 3: Basis
- 4: plattenförmiges Werkstück
- 5: Längsachse
- 6: Querachse
- 7: Greifeinheit
- 8: Biegelinie
- 9: Kippachse
- 10: Regalfach
- 11: Linearführung
- h: Scheitelhöhe
- H: lichte Höhe
- α: Kippwinkel

## Patentansprüche

1. Greifeinheit (7) zum Greifen von Werkstücken, mit:
einer Basis (3), die dazu ausgebildet ist, mit einer Handhabungseinrichtung verbunden zu werden, und
mindestens zwei Greifvorrichtungen (1), die jeweils eine Greiffläche aufweisen, die dazu eingerichtet sind, ein plattenförmiges Werkstück (4), das bevorzugt zumindest abschnittweise aus Holz, Holzwerkstoffen, Kunststoff, Aluminium oder dergleichen besteht, gemeinsam und bevorzugt abschnittsweise zu halten, wobei
jede Greifvorrichtung (1) dazu eingerichtet ist, unabhängig von und/oder gegenläufig zu der anderen Greifvorrichtung (1), bevorzugt während das Werkstück (4) gehalten wird, um eine Kippachse (9) verkippt zu werden, wobei
an einem distalen Ende, bevorzugt an einer Querachse (6), jeder Greiffläche eine Gelenkachse (2) zum Verkippen der Greiffläche angeordnet ist, **dadurch gekennzeichnet , dass** die Gelenkachsen (2) mit einem, bevorzugt mindestens zwei Aktoren gesteuert werden.

2. Greifeinheit nach Anspruch 1, bei der die Greifvorrichtung (1) und/oder Greiffläche eine Längs- (5) und Querachse (6) aufweist, wobei die Längsachse (5) der einen Greifvorrichtung (1) und/oder Greiffläche parallel zu der Längsachse (5) der anderen Greifvorrichtung (1) und/oder Greiffläche ausgerichtet sind.

3. Greifeinheit (7) nach einem der vorherigen Ansprüche, bei der in einer Nullstellung die Greifflächen der Greifvorrichtungen (1) in einer gemeinsamen Ebene liegen.

4. Greifeinheit (7) nach einem der vorherigen Ansprüche, bei der in einer Kippstellung die Greifvorrichtungen (1) und/oder Greifflächen um einen Kippwinkel α > 0 Grad, bevorzugt > 0 Grad und < 10 Grad, bevorzugt > 0 und < 5 Grad, um die Kippachse gekippt sind.

5. Greifeinheit (7) nach Anspruch 4, bei der in einer Kippstellung die Greifvorrichtungen (1) und/oder Greifflächen gegenläufig, bevorzugt im Wesentlichen V-förmig, zueinander verkippt sind.

6. Greifeinheit (7) nach einem der vorherigen Ansprüche, bei der die Greifvorrichtungen (1) als Saugeinrichtungen, insbesondere als Flachsauger, ausgebildet sind, welche eine Saugfläche aufweisen.

7. Greifeinheit nach einem der vorherigen Ansprüche, die einen, bevorzugt optischen, Sensor aufweist, welcher dazu eingerichtet ist eine Biegelinie (8) des gehaltenen Werkstücks (4) zu erfassen.

8. Handhabungssystem für horizontales Lagern und Puffern von plattenförmigen Werkstücken (4), die bevorzugt zumindest abschnittweise aus Holz, Holzwerkstoffen, Kunststoff, Aluminium oder dergleichen bestehen, mit
- einer Handhabungseinrichtung, die mit einer Greifeinheit (7) nach einem der vorherigen Ansprüche verbunden ist; und
- einer Lagereinheit mit Regalfächern, die bevorzugt horizontal angeordnet sind, um die plattenförmigen Werkstücke, bevorzugt horizontal zu stapeln.

9. Verfahren zum Greifen und Lagern von einem plattenförmigen Werkstück (4), das bevorzugt zumindest abschnittweise aus Holz, Holzwerkstoffen, Kunststoff, Aluminium oder dergleichen besteht, mit einer Greifeinheit (7) nach einem der Ansprüchen 1 bis **7,** mit den Schritten:
- Ausrichten von mindestens zwei Greifvorrichtungen (1) einer Greifeinheit (7), die jeweils eine Greiffläche aufweisen, in eine Nullstellung, sodass die Greifflächen in einer gemeinsamen Ebene liegen;
- Greifen des plattenförmigen Werkstücks (4) mit Hilfe der mindestens zwei in Nullstellung ausgerichteten Greifflächen;
- gegenläufiges, bevorzugt V-förmiges, Verkippen der Greifvorrichtungen (1) und/oder Greifflächen zueinander in eine Kippstellung, während das Werkstück (4) gehalten wird;
- Verfahren der Greifeinheit (7) mit den in Kippstellung befindlichen Greifvorrichtungen und dem gegriffenen Werkstück (4) zu einer Lagereinheit;
- Ausrichten der mindestens zwei Greifvorrichtungen (1) mit dem gehaltenen Werkstück (4) von der Kippstellung zurück in die Nullstellung innerhalb eines Regalfachs einer Lagereinheit und Ablegen des Werkstücks (4) innerhalb des Regalfachs.

## Claims

1. Gripping unit (7) for gripping workpieces, comprising:
a base (3) which is designed to be connected to a handling apparatus, and
at least two gripping devices (1), each having a gripping surface, which are configured to jointly hold a planar workpiece (4), preferably portions thereof, at least portions of which workpiece preferably consist of wood, wood materials, plastic, aluminium or the like, wherein
each gripping device (1) is configured to be tilted about a tilt axis (9) independently of and/or in the opposite direction to the other gripping device (1), preferably while the workpiece (4) is being held, wherein a joint pin (2) for tilting the gripping surface is arranged on a distal end, preferably on a transverse axis (6), of each gripping surface, **characterised in that** the joint pins (2) are controlled by means of one, preferably at least two actuators.

2. Gripping unit according to claim 1, wherein the gripping device (1) and/or gripping surface has a longitudinal (5) and transverse axis (6), wherein the longitudinal axis (5) of one gripping device (1) and/or gripping surface are oriented in parallel with the longitudinal axis (5) of the other gripping device (1) and/or gripping surface.

3. Gripping unit (7) according to any of the preceding claims, wherein, in a zero position, the gripping surfaces of the gripping devices (1) lie in a common plane.

4. Gripping unit (7) according to any of the preceding claims, wherein, in a tilt position, the gripping devices (1) and/or gripping surfaces are tilted about the tilt axis by a tilt angle α > 0 degrees, preferably > 0 degrees and < 10 degrees, preferably > 0 and < 5 degrees.

5. Gripping unit (7) according to claim 4, wherein, in a tilt position, the gripping devices (1) and/or gripping surfaces are tilted in opposite directions to one another, preferably substantially in a V-shape.

6. Gripping unit (7) according to any of the preceding claims, wherein the gripping devices (1) are designed as suction apparatuses, in particular as flat suction cups, comprising a suction surface.

7. Gripping unit according to any of the preceding claims, which has a, preferably optical, sensor which is configured to detect an elastic curve (8) of the held workpiece (4).

8. Handling system for horizontally storing and buffering planar workpieces (4) preferably consisting at least in portions of wood, wood materials, plastic, aluminium or the like, comprising
- a handling apparatus which is connected to a gripping unit (7) according to any of the preceding claims; and
- a storage unit comprising shelves arranged preferably horizontally in order to stack the planar workpieces, preferably horizontally.

9. Method for gripping and storing a planar workpiece (4) preferably consisting at least in portions of wood, wood materials, plastic, aluminium or the like, by means of a gripping unit (7) according to any of claims 1 to 7, comprising the steps of:
- orienting at least two gripping devices (1) of a gripping unit (7), which each have a gripping surface, into a zero position, such that the gripping surfaces lie in a common plane;
- gripping the planar workpiece (4) using the at least two gripping surfaces oriented in the zero position;
- tilting the gripping devices (1) and/or gripping surfaces relative to one another in opposite directions, preferably in a V-shape, into a tilt position while the workpiece (4) is being held;
- moving the gripping unit (7) with the gripping devices located in the tilt position and with the gripped workpiece (4) to a storage unit;
- orienting the at least two gripping devices (1) with the held workpiece (4) from the tilt position back into the zero position within a shelf of a storage unit and depositing the workpiece (4) within the shelf.

## Revendications

1. Unité de préhension (7) permettant de saisir des pièces, avec :
une base (3), qui est conçue pour être reliée à un appareil de manipulation, et
au moins deux dispositifs de préhension (1), qui présentent chacun une surface de préhension, qui sont configurés pour maintenir conjointement et de manière préférée par sections une pièce (4) en forme de panneau, qui est constituée de manière préférée au moins par sections de bois, de matériaux dérivés du bois, de matière plastique, d'aluminium ou similaires, dans laquelle
chaque dispositif de préhension (1) est configuré pour être basculé autour d'un axe de basculement (9) indépendamment de l'autre dispositif de préhension (1) et/ou dans le sens opposé à celui-ci, de manière préférée pendant que la pièce (4) est maintenue, dans laquelle un axe d'articulation (2) pour le basculement de la surface de préhension est disposé sur une extrémité distale, de manière préférée sur un axe transversal (6), de chaque surface de préhension, **caractérisée en ce que** les axes d'articulation (2) sont commandés avec un, de manière préférée au moins deux actionneurs.

2. Unité de préhension selon la revendication 1, dans laquelle le dispositif de préhension (1) et/ou la surface de préhension présentent un axe longitudinal (5) et un axe transversal (6), dans laquelle l'axe longitudinal (5) d'un dispositif de préhension (1) et/ou d'une surface de préhension est orienté parallèlement à l'axe longitudinal (5) de l'autre dispositif de préhension (1) et/ou de la surface de préhension.

3. Unité de préhension (7) selon l'une quelconque des revendications précédentes, dans laquelle, dans une position zéro, les surfaces de préhension des dispositifs de préhension (1) se trouvent dans un plan commun.

4. Unité de préhension (7) selon l'une quelconque des revendications précédentes, dans laquelle, dans une position de basculement, les dispositifs de préhension (1) et/ou les surfaces de préhension sont basculés autour de l'axe de basculement d'un angle de basculement α > 0 degré, de manière préférée > 0 degré et < 10 degrés, de manière préférée > 0 et < 5 degrés.

5. Unité de préhension (7) selon la revendication 4, dans laquelle, dans une position de basculement, les dispositifs de préhension (1) et/ou les surfaces de préhension sont basculés les uns par rapport aux autres en sens opposé, de manière préférée sensiblement en forme de V.

6. Unité de préhension (7) selon l'une quelconque des revendications précédentes, dans laquelle les dispositifs de préhension (1) sont réalisés en tant qu'appareils de succion, en particulier en tant que ventouses plates, qui présentent une surface d'aspiration.

7. Unité de préhension selon l'une quelconque des revendications précédentes, qui présente un capteur, de manière préférée optique, qui est configuré pour détecter une ligne de flexion (8) de la pièce (4) maintenue.

8. Système de manipulation pour le stockage horizontal et l'entreposage temporaire de pièces (4), qui sont constituées de manière préférée au moins par sections de bois, de matériaux dérivés du bois, de matière plastique, d'aluminium ou similaires, avec
- un appareil de manipulation, qui est relié à une unité de préhension (7) selon l'une quelconque des revendications précédentes ; et
- une unité de stockage avec des compartiments de rayonnage qui sont disposés de manière préférée horizontalement pour empiler les pièces en forme de panneau, de manière préférée horizontalement.

9. Procédé de préhension et de stockage d'une pièce (4) en forme de panneau, qui est constituée de manière préférée au moins par sections de bois, de matériaux dérivés du bois, de matière plastique, d'aluminium ou similaires, avec une unité de préhension (7) selon l'une quelconque des revendications 1 à 7, avec les étapes suivantes :
- l'orientation d'au moins deux dispositifs de préhension (1) d'une unité de préhension (7), qui présentent chacun une surface de préhension, dans une position zéro, si bien que les surfaces de préhension se trouvent dans un plan commun ;
- la saisie de la pièce (4) en forme de panneau à l'aide des au moins deux surfaces de préhension orientées au moins en position zéro ;
- le basculement dans le sens opposé, de manière préférée en forme de V, des dispositifs de préhension (1) et/ou des surfaces de préhension les uns par rapport aux autres dans une position de basculement, pendant que la pièce (4) est maintenue ;
- le déplacement de l'unité de préhension (7) avec les dispositifs de préhension se trouvant en position de basculement et la pièce (4) saisie vers une unité de stockage ;
- la réorientation des au moins deux dispositifs de préhension (1) avec la pièce (4) maintenue de la position de basculement à la position zéro à l'intérieur d'un compartiment de rayonnage d'une unité de stockage et le dépôt de la pièce (4) à l'intérieur du compartiment de rayonnage.
